# EUROPEAN PATENT APPLICATION

(11) **EP 2 339 317 A2**
(43) Date of publication of application: **29.06.2011**
(21) Application number: 10186678.8
(22) Date of filing: 06.10.2010
(51) Int. Cl.: G01M 11/02, G01M 11/04

(54) **Method and System for Evaluating Light Uniformity Through an Optical Lens**

(30) Priority: 23.12.2009 CN 200910312045
(71) Applicant: Foxsemicon Integrated Technology, Inc., Miao-Li, Hsien 350 (TW)
(72) Inventor: Yeh, Chao-Yi, 350, Miao-Li Hsien (TW); Huang, Chung-Chih, 350, Miao-Li Hsien (TW); Yan, Rong-Yih, 350, Miao-Li Hsien (TW)
(74) Representative: Wilson, Peter

(57) **Abstract**

A system for evaluating light uniformity through an optical lens (10) includes an operating platform (40), an image processing device (20) and a processor (50). The operating platform (40) includes a mount (42) and a holder (44). The mount (42) is configured for mounting the image processing device (20). The holder (44) is configured for holding the optical lens (10). The image processing device (20) is configured for capturing an image of a light spot corresponding to the optical lens (10). The processor (50) is electrically coupled to the image processing device (20). The mount (42) is shifted back and forth along the direction towards and away from the holder (44) for adjusting the size of the light spot of the optical lens (10). The processor (50) is configured for calculating the light uniformity through the optical lens (10) according to a minimal light spot image from the image processing device (20).

## Description

### BACKGROUND

### 1. Technical Field

The disclosure relates generally to lenses, and more particularly to a system and a method for measuring characters of the lens.

### 2. Description of the Related Art

An optical lens utilized to condense solar light is a major way to increase the efficiency of a solar cell. Normally, a microscope measures characters of the optical lens, which increases production cost accordingly. Thus, what is called for is a system and a method for evaluating light uniformity through an optical lens that can overcome the disadvantage described.

### BRIEF DESCRIPTION OF THE DRAWINGS

FIG. 1 is an isometric view of a system for evaluating light uniformity through an optical lens in accordance with a first embodiment of the disclosure.

FIG. 2 is a flowchart of a method for utilizing the system for evaluating light uniformity through an optical lens of FIG. 1 in accordance with the first embodiment of the disclosure.

### DETAILED DESCRIPTION

All of the processes described may be embodied in, and fully automated via, software code modules executed by one or more general purpose computers or processors. The code modules may be stored in any type of computer-readable medium or other storage device. Some or all of the methods may alternatively be embodied in specialized computer hardware or communication apparatus.

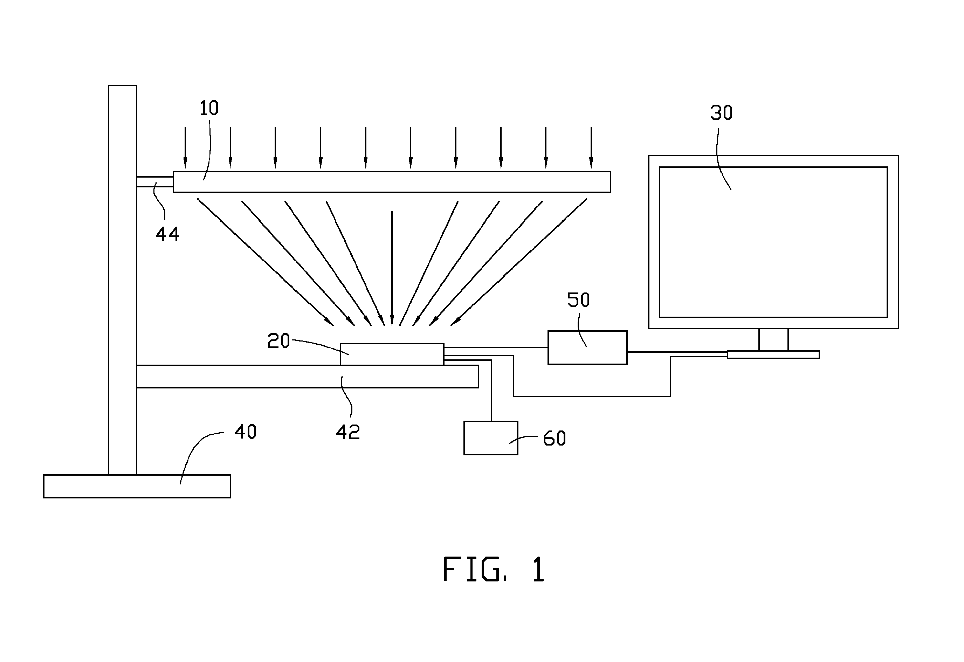

Referring to FIG. 1, a system for evaluating light uniformity through an optical lens 10 in accordance with a first embodiment of the disclosure includes an image processing device 20, a displaying device 30, an operating platform 40, a processor 50 and a comparator 60. The optical lens 10 according to the first embodiment is a Fresnel lens.

The displaying device 30 is electrically coupled to the image processing device 20. The processor 50 is electrically coupled to the image processing device 20 and the displaying device 30. The comparator 60 is electrically coupled to the image processing device 20.

The image processing device 20 is configured for capturing a light spot image of the optical lens 10 and providing the image thereof to the displaying device 30. The image processing device 20 includes a charge coupled device image sensor (CCD image sensor) or a complementary metal-oxide semiconductor image sensor (CMOS image sensor).

The displaying device 30 is configured for showing the light spot image from the image processing device 20.

The operating platform 40 includes a mount 42 and a holder 44. The mount 42 is configured for mounting the image processing device 20. The holder 44 is configured for holding the optical lens 10. The operating platform 40 is configured for controlling the mount 42 to move back and forth along the direction towards and away from the optical lens 10 held by the holder 44. Thus, the size of the light spot image is variable. Accordingly, the image processing device 20 can capture several light spot images corresponding to different distances between the image processing device and the optical lens 10.

The comparator 60 is configured for comparing several images captured by the image processing device 20. When a minimal light spot image is selected from the several images by the comparator 60, the comparator 60 provides a signal to the image processing device 20 to capture the minimal light spot image. The comparator 60 can be a physical device or a software code module executed in a general purpose computer.

The image processing device 20 provides the minimal light spot image to the processor 50. The processor 50 is configured for calculating light uniformity through the optical lens 10 according to the image from the image processing device 20. The image provided by the image processing device is a digital image. The image consists of many pixels. One way to calculate light uniformity through the optical lens 10 is to divide a grey scale of the minimal intensity pixel of the image by a grey scale of the maximal intensity pixel of the image and then multiply the resulted quotient by 100 to get the light uniformity. Another way to calculate light uniformity is to divide the grey scale of the minimal intensity pixel of the image by an average grey scale of total pixels of the image and then multiply the resulted quotient by 100 to get the light uniformity.

The processor 50 provides the value of the light uniformity to the display device 30. The display device 30 shows the value of light uniformity. In addition, the image processing device 20 can provide the minimal light spot image to the display device 30. The minimal light spot image can be displayed by the display device 30 and then can be measured by eye directly.

The processor 50 provides the light uniformity value to the display device 30. The display device 30 shows the value of the light uniformity through the optical lens 10.

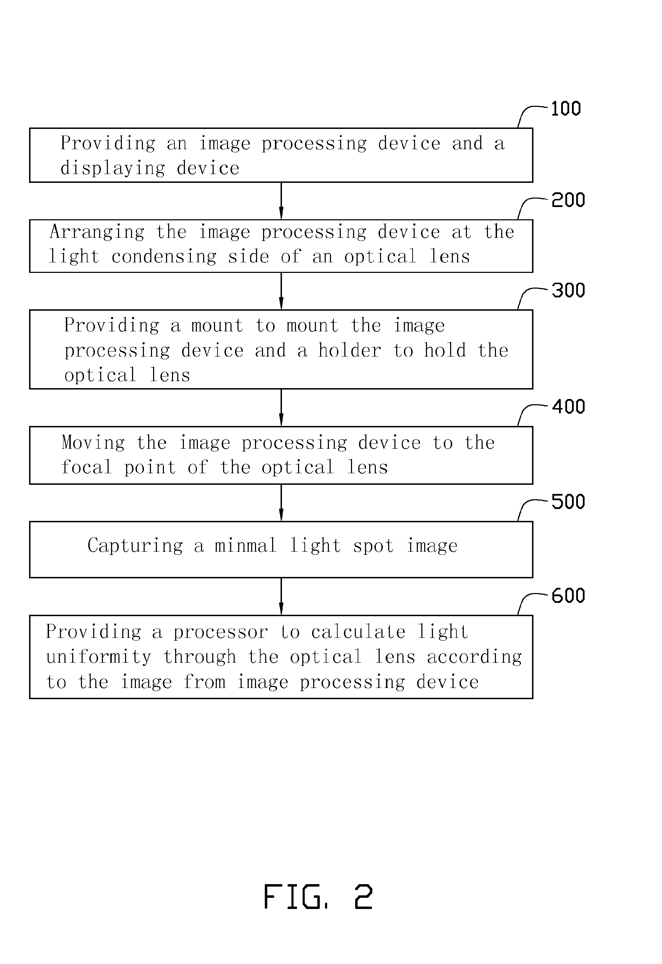

Referring to FIG. 2, is a flowchart of a method for utilizing the system for evaluating light uniformity through an optical lens of FIG. 1 in accordance with the first embodiment of the disclosure.

In block 100, the image processing device 20 and the display device 30 are provided. The display device 30 is electrically coupled to the image processing device 20.

In block 200, the image processing device 20 is arranged at a light condensing side of the optical lens 10.

In block 300, the mount 42 of the operating platform 40 and the holder 44 thereof are provided. The mount 42 is configured for mounting the image processing device 20. The holder 44 is configured for holding the optical lens 10. The mount 42 can be moved back and forth along the direction towards and away from the optical lens 10 held by the holder 44.

In block 400, the image processing device 20 is moved to the focal point of the optical lens 10. When the image processing device 20 is moved back and forth, the image processing device 20 can capture several light spot images of the optical lens corresponding to different distances between the image processing device 20 and the optical lens 10. When the image processing device 20 is configured at the design focal point, the minimal light spot image can be captured by the image processing device 20.

In block 500, the minimal light spot image is captured by the image processing device 20. The comparator 60 is configured for comparing the sizes of the several light spot images. When the minimal light spot image is selected, the comparator 60 provides a signal to the image processing device 20. The image processing device 20 captures the minimal light spot image.

In block 600, the processor 50 is provided to calculate light uniformity through the optical lens 10 according to the minimal light spot image from the image processing device 20.

While the disclosure has been described by way of example and in terms of exemplary embodiment, it is to be understood that the disclosure is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A system for evaluating light uniformity through an optical lens comprising:
an operating platform comprising a mount and a holder;
an image processing device configured for capturing an image of a light spot corresponding to the optical lens; and
a processor electrically coupled to the image processing device, the mount configured for mounting the image processing device, the holder configured for holding the optical lens, the mount moved back and forth along the direction towards and away from the holder for adjusting the size of the light spot of the optical lens, the processor calculating the light uniformity through the optical lens according to a minimal light spot image from the image processing device.

2. The system for evaluating light uniformity through an optical lens as claimed in claim 1 further comprising a comparator, wherein the comparator provides a signal to image processing device when the minimal light spot image is obtained, the image processing device capturing the minimal light spot image according to the signal from the comparator.

3. The system for evaluating light uniformity through an optical lens as claimed in claim 1 or claim 2 further comprising a displaying device electrically coupled to the image processing device and the processor, the displaying device configured for showing the light spot image and the light uniformity through the optical lens calculated by the processor.

4. The system for evaluating light uniformity through an optical lens as claimed in any preceding claim, wherein the image processing device comprises a charge coupled device image sensor.

5. The system for evaluating light uniformity through an optical lens as claimed in one of claims 1 to 3, wherein the image processing device comprises a complementary metal-oxide semiconductor image sensor.

6. A method for evaluating light uniformity through an optical lens comprising:
providing an image processing device;
arranging the image processing device at a light condensing side of the optical lens;
providing a mount of an operating platform to mount the image processing device and a holder of the operating platform to hold the optical lens, the mount moved back and forth along the direction towards and away from the holder;
capturing a minimal light spot image by the image processing device when the mount is moved back and forth along the direction towards and away from the holder; and
providing a processor to calculate the light uniformity through the optical lens according to the minimal light spot image from the image processing device.

7. The method for evaluating light uniformity through an optical lens as claimed in claim 6, further comprising:
providing a comparator to provide a signal to the image processing device when the image processing device obtains the minimal light spot image; and
capturing the minimal light spot image according to the signal from the comparator.

8. The method for evaluating light uniformity through an optical lens as claimed in claim 6 or claim 7, further comprising:
providing a displaying device electrically coupled to the processor and the image processing device to show the minimal light spot image and the uniformity of the optical lens.

9. The method for evaluating light uniformity through an optical lens as claimed in one of claims 6 to 8, wherein the image processing comprises a charge coupled device image sensor.

10. The method for evaluating light uniformity through an optical lens as claimed in one of claims 6 to 8, wherein the image processing comprises a complementary metal-oxide semiconductor image sensor.

11. A method for evaluating light uniformity through a Fresnel lens comprising:
providing an image processing device;
arranging the image processing device at a light condensing side of the optical lens;
moving the image processing device back and forth along the direction towards and away from the Fresnel lens to obtain a plurality of light spot images by the image processing device;
obtaining a minimal light spot image by the image processing device; and
calculating a light uniformity through the Fresnel lens according to the minimal light spot image from the image processing device.

12. The method for evaluating light uniformity through an optical lens as claimed in claim 11 further comprising showing the minimal light spot image and the uniformity of the optical lens in a display.

13. The method for evaluating light uniformity through an optical lens as claimed in claim 11 or claim 12, wherein the image processing device comprises a charge coupled device image sensor.

14. The method for evaluating light uniformity through an optical lens as claimed in claim 11 or claim 12, wherein the image processing device comprises a complementary metal-oxide semiconductor image sensor.
